Europäisches Patentamt

European Patent Office

Office européen des brevets

(19)

(11) EP 0 738 887 A1

(12) DEMANDE DE BREVET EUROPEEN

(43) Date de publication:
23.10.1996 Bulletin 1996/43

(51) Int Cl.6: G01N 21/39

(21) Numéro de dépôt: 96400802.3

(22) Date de dépôt: 16.04.1996

(84) Etats contractants désignés:
DE GB IT NL

(30) Priorité: 21.04.1995 FR 9504829

(71) Demandeur: L'AIR LIQUIDE, SOCIETE ANONYME POUR
L'ETUDE ET L'EXPLOITATION DES PROCEDES
GEORGES CLAUDE
F-75321 Paris Cédex 07 (FR)

(72) Inventeurs:
• Ronge, Catherine
  75013 Paris (FR)
• Bounaix, Fabrice
  54300 Luneville (FR)
• Mauvais, Patrick
  78450 Villepreux (FR)
• Stoeckel, Frédéric
  38402 St. Martin d'Herees Cedex (FR)

(74) Mandataire: Vesin, Jacques et al
L'AIR LIQUIDE, S.A.,
Service Propriété Industrielle,
75 quai d'Orsay
75321 Paris Cédex 07 (FR)

(54) **Procédé et dispositif d'analyse de traces d'impuretés dans un échantillon de gaz au moyen d'une diode laser**

(57) L'invention concerne un procédé d'analyse de traces d'au moins une impureté dans un échantillon de gaz, par absorption par l'impureté à détecter, d'un faisceau de lumière émis par une diode laser semi-conducteur, le faisceau émis par la diode étant divisé en au moins deux faisceaux dérivés, l'un dit de mesure qui traverse l'échantillon de gaz à analyser dans une cellule multipassage avant d'être focalisé sur un photodétecteur de mesure, un autre faisceau dérivé dit de référence étant, le long d'une voie de référence, directement focalisé sur un photodétecteur de référence, sans rencontrer l'échantillon de gaz, et se caractérise en ce que l'échantillon de gaz est à une pression au moins égale à la pression atmosphérique, et en ce que l'on a introduit une modulation du courant d'alimentation de la diode, qui comprend au moins une fonction de type exponentiel.

FIG.1

## Description

La présente invention concerne le domaine de la détection de traces d'impuretés (par exemple de vapeur d'eau) dans un échantillon de gaz. Elle concerne tout particulièrement les méthodes de détection et de quantification de telles traces d'impuretés utilisant la spectroscopie laser dans le proche infrarouge.

Si l'on considère l'exemple de la détection des traces de vapeur d'eau, avant l'apparition des techniques d'analyse par spectroscopie laser infrarouge (le plus souvent référencée dans la littérature sous la dénomination "TDLAS", pour "Tunable Diode Laser Absorption Spectroscopy"), les hygromètres disponibles sur le marché (qu'il s'agisse par exemple d'hygromètres à point de rosée, d'hygromètres à quartz vibrants, d'hygromètres électrolytiques $P_2O_5$), offraient des performances insuffisantes tant sur la limite inférieure de détection (dépassant les 10 ppb), que sur le temps de réponse de ces appareils souvent prohibitif pouvant dépasser l'heure, avec une durée de mise en oeuvre souvent supérieure à quelques heures.

La méthode dite APIMS (pour Atmospheric Pressure Mass Spectrometer) a apporté dans un premier temps une amélioration considérable des performances atteintes par rapport aux hygromètres traditionnels, avec une limite de détection atteignant 10 ppt de vapeur d'eau dans un gaz neutre et un temps de réponse de l'ordre de quelques minutes pour des variations de teneur d'un échantillon à l'autre, pouvant s'étaler sur trois ordres de grandeur.

En revanche, qu'il s'agisse des hygromètres traditionnels ou de l'APIMS, leur fonctionnement est relativement incompatible avec la mesure d'impuretés dans des gaz corrosifs (tels que HCl, HBr, HF...), ces hygromètres présentant alors des sensibilités ne descendant pas au-dessous de 100 ppb dans le meilleur des cas, leurs performances étant largement dégradées par la présence de tels gaz corrosifs, et leur fonctionnement étant même parfois rendu impossible pour cause de dégradation de l'instrumentation (non compatibilité des matériaux).

On assiste alors depuis quelques années à l'apparition d'une littérature très abondante concernant les techniques de détection TDLAS ci-dessus évoquées, reposant sur la quantification de traces d'impuretés (par exemple de vapeur d'eau) par la mesure de l'intensité d'absorption optique des molécules d'impuretés considérées dans l'infrarouge, et dont le principe est le suivant : l'impureté absorbe de la lumière à certaines longueurs d'ondes, la connaissance de ces longueurs d'ondes et l'intensité et le profil des raies d'absorption correspondantes (présentant l'allure d'une Lorentzienne), permettent d'identifier la présence de la molécule et de quantifier cette présence dans le milieu analysé.

En conservant l'exemple de la détection de la molécule d'eau, la source laser (le plus souvent une diode laser à semi-conducteur), peut émettre de la lumière à une longueur d'onde très précise dans le proche infrarouge, longueur d'onde que l'on peut faire varier en ajustant la température et le courant d'alimentation de la diode.

La loi de Beer Lambert est le plus souvent utilisée pour exprimer l'intensité de la lumière transmise par le milieu gazeux qui comprend les molécules d'impuretés, telle qu'atténuée aux longueurs d'ondes caractéristiques de ces molécules d'impuretés, suivant la formule :

$$I(\lambda) = I_o (\lambda) \cdot \exp (- k \cdot N \cdot L/\pi.\gamma)$$

où

N, représente la concentration de la molécule absorbante,
$I_o$, l'intensité initiale du faisceau émis par la diode, à l'entrée de l'échantillon de gaz analysé,
k, l'intensité de la raie d'absorption,
L, la longueur de passage dans l'échantillon de gaz analysé, et
$\gamma$, la largeur de la raie.

On voit donc qu'il est possible de détecter une impureté en balayant à l'aide de la diode laser le profil d'une de ces raies d'absorption caractéristique. On constate également que l'intensité du signal enregistré sera d'autant plus élevée que la concentration en impuretés dans l'échantillon analysé, l'intensité de la raie d'absorption choisie, et la longueur de passage du faisceau émis par la diode dans l'échantillon du gaz analysé, sont élevées.

Le premier des trois paramètres est au demeurant clairement imposé par la gamme de teneurs en impuretés visées (par exemple voisine du ppb). En revanche, il est toujours possible de choisir l'une des raies d'absorption les plus intenses du spectre de la molécule considérée, et de chercher à obtenir une longueur de passage maximum du faisceau dans l'échantillon de gaz à analyser (tout en essayant de pénaliser le moins possible l'encombrement global de l'appareil).

On constate aussi sur cette formulation le fait que pour les faibles absorptions, la concentration de l'impureté absorbante dans l'échantillon analysé peut être déduite de façon linéaire de la mesure de l'absorbance pour la raie considérée.

Comme signalé précédemment, ce principe a été très largement utilisé ces dernières années dans des travaux concernant la détection de traces de vapeur d'eau, la diode laser étant réglée sur une longueur d'onde se situant autour de 1,37 $\mu$m, ou encore la détection de traces de $CH_4$ ou $N_2O$ (on se reportera notamment aux travaux suivants : D. Cassidy et al paru dans Applied Optics, July 1982, p2527; J. Mucha et al, paru dans ISA Transactions, 1986, Vol 25, p25; G. Devyatykh et al, parus dans SPIE Vol 1724, Tunable Diode Laser Applications, p335; et S. Bone et al, paru dans Applied Spectroscopy, 1993, Vol 47, p834).

L'examen des performances annoncées par ces différents travaux appelle les remarques suivantes :

- l'utilisation de pressions voisines de la pression atmosphérique ou supérieures à cette pression atmosphérique conduisant à un élargissement et à une diminution de l'amplitude des raies d'absorption, ces travaux ont le plus souvent fait le choix de conditions opératoires de basse pression ;

- de telles conditions de basse pression représentent alors incontestablement un inconvénient majeur pour une application de la méthode à des conditions industrielles où des mesures in-situ sont souvent recherchées;

- ces conditions de basse pression représentent par ailleurs des inconvénients liés à la complexité, au coût, et à l'encombrement du procédé, mais également par l'utilisation des pompes qu'elles imposent, des problèmes de vibrations difficiles à maîtriser et non sans conséquence sur la limite de détection atteinte;

- les niveaux de détection annoncés restent très élevés (typiquement quelques dizaines de ppm), les niveaux très bas parfois annoncés étant toujours prospectifs (extrapolation de résultats déjà obtenus) ;

- ces résultats concernant de la détection de vapeur d'eau dans des gaz neutres, aucune information n'est donnée concernant la compatibilité de telles méthodes avec des milieux gazeux corrosifs, et en tout état de cause, la mise en oeuvre de pompes à vide apparaît peu compatible avec de telles atmosphères corrosives ;

- les niveaux de détection atteints et l'absence de compatibilité avec la présence de gaz corrosifs rendent dès lors ces méthodes non applicables au cas des lignes de gaz des fabricants de microélectronique, pour lesquelles les niveaux de détection à atteindre doivent être voisins du ppb, dans des gaz vecteurs très variables, qu'ils soient inertes (l'azote, l'argon...), ou spéciaux plus ou moins corrosifs selon les cas ($SiH_4$, HBr, HCl...).

Dans ce contexte, l'objectif de la présente invention est de proposer une méthode d'analyse de traces d'au moins une impureté dans un échantillon de gaz :

- permettant d'atteindre des niveaux de détection aussi bas que le ppb;

- quelles que soient les caractéristiques de l'échantillon de gaz contenant l'impureté (qu'il s'agisse par exemple d'un gaz neutre ou de gaz spéciaux actifs pour l'électronique) ;

- aisément utilisable en milieu industriel, et donc à ce titre, présentant des caractéristiques de faible encombrement et de poids réduit (appareil transportable, voire portable) ;

- une grande facilité et rapidité de mise en oeuvre (par exemple un temps de purge raisonnable au moins inférieur à 30 minutes), et un temps de réponse réduit (de l'ordre de quelques secondes); et

- compatible avec un fonctionnement à la pression atmosphérique ou au dessus (en pratique, quelques bars).

Les travaux menés à bien par la Demanderesse dans ce domaine ont montré qu'il était possible de proposer une solution de bon compromis à ces objectifs, pourtant pour certains contradictoires.

Cette solution, basée sur le principe de spectroscopie infrarouge par diode laser à semi-conducteur, met en oeuvre la division du faisceau émis par la diode en au moins deux faisceaux dérivés, l'un dit de mesure rencontrant l'échantillon de gaz à analyser qui est à une pression au moins égale à la pression atmosphérique (le long d'une voie dite de mesure), l'autre dit de référence ne rencontrant pas cet échantillon de gaz (le long d'une voie dite de référence), les chemins optiques des voies mesure et référence étant égalisés respectivement entre la diode et un photodétecteur de mesure présent en bout de voie de mesure et entre la diode et un photodétecteur de référence présent en bout de voie de référence, une modulation de la longueur d'onde émise par la diode comprenant au moins une fonction de type exponentiel ayant été introduite.

Les travaux qu'a menés la Demanderesse, notamment dans le domaine de la détection de traces de vapeur d'eau, ont en effet démontré l'importance du fait d'avoir égalisé dans l'air, les chemins optiques des voies mesure et référence, pour accéder à des limites de détection de l'ordre du ppb, ceci afin de s'affranchir de la contribution de l'humidité de l'air ambiant au signal mesuré. La modulation particulière comprenant une composante exponentielle permet par ailleurs avantageusement d'accommoder l'élargissement et l'affaissement de la raie d'absorption induits par le fonctionnement à pression voisine de la pression atmosphérique et a fortiori supérieure. Cette modulation exponentielle donne des résultats améliorés par rapport aux modulations classiquement utilisées de forme rectangulaire, sinusoïdale, triangulaire ou encore de rampe, conduisant notamment à des formes de pic d'absorption très symétrique, se rapprochant du profil théorique d'une Lorentzienne parfaite.

La méthode selon l'invention d'analyse de traces d'au moins une impureté dans un échantillon de gaz au moyen d'une diode laser accordable, au cours de laquelle on mesure l'absorption par l'impureté à détecter, d'un faisceau de lumière émis par la diode, le courant d'alimentation de la diode comprenant une composante continue et une composante variable permettant d'introduire une modulation de la longueur d'onde émise afin de décrire tout ou partie du profil d'au moins une des raies d'absorption de l'impureté, le faisceau émis par la diode étant divisé en au moins deux faisceaux dérivés, dont l'un dit de mesure est le long d'une voie de mesure dirigée vers l'échantillon de gaz à analyser qu'il traverse dans une cellule multipassage, avant d'être focalisé sur un photodétecteur de mesure, un autre faisceau dérivé dit de référence étant le long d'une voie de référence directement focalisé sur un photodétecteur de référence sans rencontrer l'échantillon de gaz, et les chemins optiques des voies mesure et référence, respectivement entre la diode et le photodétecteur de mesure, et entre la diode et le photodétecteur de référence, ayant été égalisés dans l'air,

se caractérise en ce que l'échantillon de gaz à analyser est à une pression au moins égale à la pression atmosphérique et en ce que la modulation introduite comprend au moins une fonction de type exponentiel.

On entend par l'expression "une fonction de type exponentiel" selon l'invention, tant une exponentielle effective (par exemple en $I_o$ (1- A exp. (-$\alpha$t))), qu'une somme non linéaire de polynômes (puisque comme on le sait, une fonction exponentielle peut être mathématiquement décomposée en une somme de polynômes).

La pression de travail selon l'invention sera avantageusement située dans l'intervalle [$10^5$ Pa, 3 x $10^5$ Pa ] absolus, mais comme il apparaîtra clairement à l'homme du métier, une pression de quelques bars supérieure pourra se rencontrer dans certains cas de canalisations industrielles.

Les chemins optiques, hors cellule d'absorption, sont égalisés à l'aide d'un ajustement de trajet optique dont la précision doit être submillimétrique, voire micrométrique. Une telle égalisation des chemins optiques peut par exemple être obtenue par l'utilisation d'un système de miroirs plans, placés sur le trajet du faisceau référence, et permettant de faire varier la longueur du chemin optique de cette voie référence entre la diode laser et le photodétecteur référence, sans en modifier l'alignement.

Comme signalé précédemment, la modulation introduite, qui comprend une fonction de type exponentiel (par exemple en $I_o$ (1- A exp. (-$\alpha$t))), a montré, comme il sera développé plus loin dans le cadre d'exemples, des résultats sensiblement améliorés par rapport aux modulations traditionnellement utilisées et recommandées dans la littérature, en permettant de mieux accommoder les phénomènes d'élargissement et de diminution d'amplitude des raies d'absorption induites par un fonctionnement à une pression voisine de la pression atmosphérique.

La source laser utilisée sera avantageusement une diode à semi-conducteur du type InGaAsP (types dits DFB, DBR, DFB/DBR, bien connus de l'homme du métier) ou encore une diode du type laser solide à cristaux dopés.

Comme il apparaîtra clairement à l'homme du métier, selon l'impureté à détecter dans l'échantillon de gaz à analyser, l'émission de la diode sera centrée sur une longueur d'onde correspondant à une raie d'absorption avantageuse pour l'impureté considérée (par exemple sur la longueur d'onde voisine de 1,37 $\mu$m, ou encore sur une longueur d'onde voisine de 1,9 $\mu$m pour détecter des traces de vapeur d'eau).

La diode est alors avantageusement stabilisée en température (par exemple par l'utilisation d'un élément à effet Peltier), pour centrer son émission sur la raie d'absorption choisie, le courant utilisé pour alimenter la diode permettant alors de moduler la longueur d'onde afin de décrire tout ou partie du profil de la raie d'absorption choisie pour la molécule considérée (le courant d'alimentation de la diode comprend alors une composante continue et une composante variable, cette dernière servant à moduler la longueur d'onde émise).

Selon une des mises en oeuvre de l'invention, on ne dispose aucune cellule sur la voie référence, entre la diode et le photodétecteur de référence.

Avantageusement, la diode et/ou les photodétecteurs mesure et référence sont montés sans fenêtre.

La cellule multipassage utilisée est par exemple du type HERRIOT, telle que composée de deux miroirs sphériques de même focale, l'un de ces miroirs comprenant un orifice excentré par lequel le faisceau entre et sort de la cellule après un certain nombre de réflexions. La fenêtre d'entrée de la cellule est avantageusement inclinée à l'angle de Brewster, afin que le faisceau naturellement polarisé de la diode laser soit transmis en totalité, en minimisant les réflexions parasites, source de perturbation du signal.

On pourra également envisager par exemple une cellule multipassage du type astigmatique.

On s'attachera à rendre la cellule multipassage utilisée matériellement compatible avec des échantillons de gaz à analyser très variables, qu'il s'agisse des gaz de très haute pureté (par exemple détection de teneurs résiduelles en vapeur d'eau à la hauteur du ppb dans de l'azote ou de l'argon à très haute pureté), ou encore de gaz corrosifs employés dans l'industrie de la microélectronique tels que HF, HCl, HBr, etc. On s'attachera alors à réaliser la cellule mais aussi les miroirs qui la composent dans des matériaux présentant tout d'abord une bonne compatibilité avec les gaz corrosifs, tels que du nickel, ou encore l'Hastelloy, mais également un très faible taux de dégazage/désorption des molécules à détecter.

On s'attachera également à construire la cellule selon les règles de l'ultra vide ou des gaz de très haute pureté, en privilégiant les matériaux métalliques, et en évitant les matériaux polymères, y compris pour les joints, sauf quand leur utilisation se révèle nécessaire (notamment autour de la fenêtre).

Selon un mode préférentiel de mise en oeuvre de l'invention, la cellule est élaborée en un seul bloc (donc dans la masse) métallique, sans joints ou cordons de soudure qui représentent des points potentiellement vulnérables à la corrosion.

Toujours dans un souci de minimiser les bruits optiques et autres réflexions parasites, on pourra par exemple s'attacher, pour l'organe servant à diviser le faisceau émis par la diode en autant de faisceaux dérivés, à utiliser un organe séparateur (par exemple une lame séparatrice) de faible épaisseur, parfaitement dégagé. On pourra également incliner suffisamment les détecteurs pour limiter les réflexions vers la diode laser, et dégager la face arrière de cette diode laser, mais aussi de façon générale, éviter qu'à aucun moment les faisceaux ne soient diaphragmés en aval de l'organe séparateur.

Pour atteindre l'objectif d'une limite de détection aussi faible que le ppb (par exemple le ppb de vapeur d'eau), il est avantageux, en complément de l'égalisation des chemins optiques analyse/référence déjà évoquée plus haut, de balayer l'espace compris entre la diode laser et chaque détecteur par un gaz de protection, ce flux de gaz de protection permettant d'une part de réduire le signal parasite dû à la présence d'impuretés dans la tête de détection, mais aussi d'augmenter la puissance optique transmise du fait de la moindre absorption par la présence de telles impuretés parasites.

Un tel balayage par un gaz de protection (avantageusement de l'azote ou encore de l'argon), sera avantageusement mis en oeuvre en incluant l'ensemble constitué de la diode, des photodétecteurs mesure et référence, et de la cellule multipassage comprenant le gaz à analyser dans un capot, isolé de l'atmosphère environnante, et que l'on balaiera par un tel flux de gaz de protection. L'absence de fenêtre au niveau des détecteurs et de la diode représente alors un point tout à fait positif pour limiter la présence de quelconques volumes morts non purgés.

Un tel balayage du gaz de protection sera avantageusement réalisé de façon laminaire, pour améliorer l'efficacité et la stabilité de l'écoulement, mais également pour optimiser la consommation de gaz.

Pour favoriser l'obtention de temps de réponse améliorés de la méthode, il apparaît tout particulièrement avantageux de minimiser le temps de séjour des molécules de l'échantillon de gaz à analyser dans la cellule, ce que la Demanderesse à obtenu selon l'invention en minimisant les volumes morts et les phénomènes de Vortex à l'entrée du gaz dans la cellule et lors de son parcours dans cette cellule, en assurant un écoulement laminaire ou quasi laminaire du gaz dans la cellule. Une illustration de modes de réalisation permettant d'obtenir un tel écoulement laminaire est donnée plus loin dans la présente description.

L'invention concerne également un appareil d'analyse de traces d'au moins une impureté dans un échantillon de gaz, convenant pour la mise en oeuvre de l'invention, comprenant :

-   une diode laser à semi-conducteur;
-   au moins un système séparateur permettant de diviser le faisceau émis par la diode en au moins deux faisceaux dérivés, l'un dit de mesure et l'autre dit de référence ;
-   une cellule multipassage contenant l'échantillon de gaz à analyser ;
-   un dispositif optique permettant de diriger, le long d'une voie optique mesure, le faisceau mesure sur la cellule multipassage ;
-   un photodétecteur mesure ;
-   un dispositif optique permettant de diriger le faisceau mesure issu de la cellule multipassage sur le photodétecteur mesure ;
-   un photodétecteur de référence ;
-   un dispositif optique permettant de diriger, le long d'une voie optique référence, le faisceau dérivé référence sur le photodétecteur référence ;
-   des éléments d'acquisition et de traitement des faisceaux générés par les deux photodétecteurs,

l'appareil comprenant des moyens permettant d'égaliser les chemins optiques des voies mesure et référence, respectivement entre la diode et le photodétecteur de mesure, et entre la diode et le photodétecteur de référence,

et se caractérisant en ce qu'il comprend des moyens de modulation du courant d'alimentation de la diode, permettant d'introduire une modulation comprenant une fonction de type exponentiel.

Les moyens d'égalisation pourront par exemple comprendre des systèmes de miroirs plans présents sur la voie référence entre le système séparateur et le photodétecteur référence.

Selon un des aspects de l'invention, l'appareil comprend un élément à effet Peltier permettant la stabilisation de la température de la diode.

La diode et/ou les photodétecteurs mesure et référence sont avantageusement dépourvus de fenêtre.

L'ensemble constitué de la diode, des photodétecteurs mesure et référence, et de la cellule multipassage qui comprend le gaz à analyser, sera avantageusement isolé de l'atmosphère environnante, en l'incluant dans un capot , ce capot étant muni de moyens permettant le balayage de l'intérieur du capot par un flux de gaz de protection. Les moyens utilisés pour effectuer ce balayage seront avantageusement dimensionnés pour que le balayage produit soit substantiellement laminaire.

On pourra envisager pour obtenir un tel régime substantiellement laminaire par exemple des canalisations en poreux. On pourra également se reporter au travaux effectués par la Demanderesse concernant les systèmes d'injection de gaz pour la réalisation d'atmosphères de protection dans des espaces confinés (demande de brevet Français N° 93.15503 du 22 Décembre 1993).

La cellule se présente avantageusement sous la forme d'un seul bloc métallique élaboré dans la masse (donc sans joint ou cordon de soudure).

Selon un des aspects de l'invention, les points d'injection du gaz dans la cellule, et de sortie de gaz de la cellule, sont conçus de façon à établir un régime de circulation du gaz à analyser dans la cellule substantiellement laminaire.

D'autres caractéristiques et avantages de la présente invention ressortiront de la description suivante de modes de réalisation donnés à titre illustratif mais nullement limitatif, faite en relation avec les dessins annexés, sur lesquels :

- la figure 1 est une représentation schématique d'une installation convenant pour la mise en oeuvre de l'invention ;
- la figure 2 est une représentation schématique de certains des éléments optiques se trouvant sur le trajet des faisceaux mesure et référence ;
- la figure 3 est une représentation d'un exemple de fonction de modulation du courant de la diode laser comprenant une composante exponentielle ;
- la figure 4 illustre les résultats obtenus, dans le cas de l'utilisation d'une modulation exponentielle en 1-exp. (-2,5 t), pour différentes concentrations en $H_2O$ présentes dans l'échantillon de gaz à analyser ;
- les figures 5 et 6 illustrent les résultats comparatifs du signal obtenu en l'absence de vapeur d'eau dans l'échantillon de gaz à analyser (balayage de la cellule sous azote) utilisant respectivement une modulation en dents de scie (At + B) et une modulation exponentielle (1-exp.(-2,5 t)) ;
- les figures 7 et 8 illustrent un exemple de réalisation d'un régime d'écoulement laminaire du gaz à analyser dans la cellule.

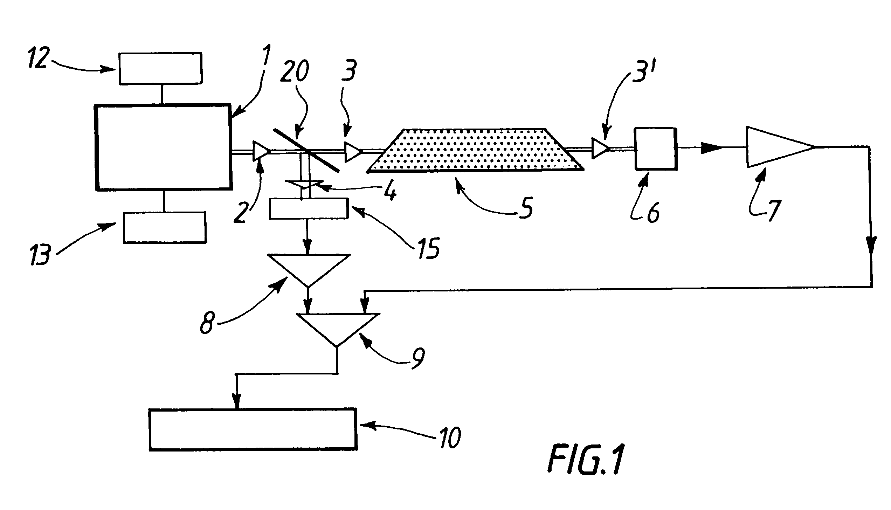

La figure 1 illustre schématiquement le trajet des faisceaux mesure et référence depuis la diode jusqu'au système d'acquisition et de traitement de l'information. Une diode à semi-conducteur accordable 1 (ici du type InGaAsP) émet un faisceau 2 qui est séparé par une lame séparatrice 20 en un faisceau mesure non dévié 3 et un faisceau référence réfléchi 4.

La diode est stabilisée en température, par exemple à une température voisine de la température ambiante, par utilisation d'un élément à effet Peltier 12.

Elle est alimentée en courant par un générateur de courant 13, comprenant une composante continue et une composante variable servant à moduler la longueur d'onde du faisceau émis par la diode afin de décrire tout ou partie du profil de la raie d'absorption choisie pour la molécule analysée.

Le faisceau mesure 3 est aligné de manière à être injecté dans une cellule 5 avantageusement de type HERRIOT (contenant l'échantillon de gaz à analyser), en un point donné et avec des coefficients directeurs donnés. La fenêtre d'entrée dans la cellule 5 est avantageusement inclinée à l'angle de Brewster afin que le faisceau naturellement polarisé soit transmis en totalité.

Le faisceau mesure 3' obtenu en sortie de cellule est focalisé sur un détecteur 6 (par exemple InGaAs ou encore Ge).

Le courant généré par le photodétecteur 6 est pré-amplifié sur un amplificateur trans-impédance 7, le signal en tension en résultant étant envoyé sur un amplificateur différentiel 9.

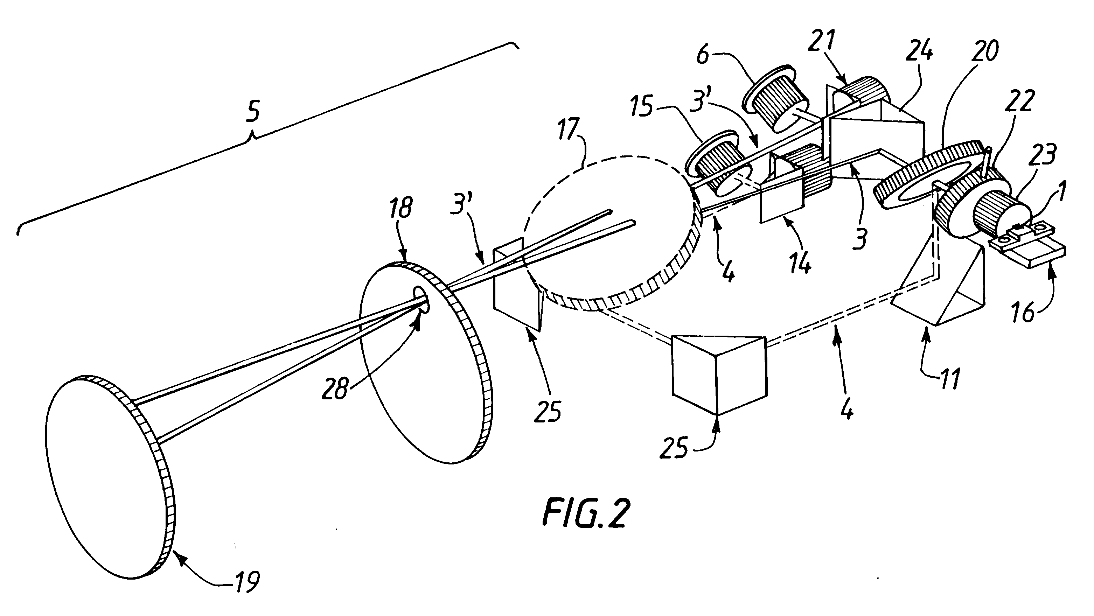

Le faisceau référence 4 est quant à lui dirigé sur un système de miroirs (non représentés sur cette figure) qui focalisent le faisceau sur un photodétecteur 15, et qui permet également de faire varier la longueur du chemin optique de la voie référence entre la diode laser et le détecteur 15, sans en modifier l'alignement, permettant ainsi d'égaliser les longueurs des chemins optiques des voies référence et mesure dans l'air (les éléments optiques intervenant dans cette égalisation des chemins optiques des voies mesure et référence seront détaillés plus loin dans le cadre de la figure 2).

Le courant généré par le photodétecteur 15 est ici encore pré-amplifié sur un amplificateur trans-impédance 8, le signal en tension en résultant étant envoyé sur l'amplificateur différentiel 9 déjà évoqué, qui effectue la soustraction avec le signal issu du pré-amplificateur 7, afin de restituer le profil de la raie d'absorption des traces d'impuretés de l'échantillon de gaz analysé.

Pour le mode de réalisation représenté, la soustraction des faisceaux est effectuée après que chaque faisceau ait été préamplifié sur un amplificateur trans-impédance (7,8). Une variante pourrait consister à effectuer la soustraction puis la préamplification du signal obtenu lors de l'opération de soustraction.

Le signal en résultant est dirigé vers un système 10 d'acquisition et d'intégration de données, où ce signal est filtré, échantillonné, et converti en un signal numérique, puis stocké en mémoire, ceci pour chacune des longueurs d'onde balayées dans la raie d'absorption par le signal émis par la diode 1. L'opération est donc renouvelée pour chacune de ces longueurs d'onde et les signaux correspondants additionnés aux précédents avec l'objectif d'améliorer le rapport signal/bruit. Cette opération est avantageusement renouvelée autant de fois que nécessaire pour obtenir un rapport signal/bruit favorable.

La figure 2 fournit le détail des éléments d'optiques rencontrés par les faisceaux mesure 3 et référence 4 entre la diode 1 et le système d'acquisition et de traitement des données 10.

La diode laser 1, émet un faisceau qui est dirigé vers la lame séparatrice 20, en passant ici par une optique de collimation 23 et un diaphragme 22, le faisceau émis étant séparé en les faisceaux mesure 3 et référence 4.

Le faisceau mesure 3 rencontre un miroir 24, avant d'atteindre la cellule multipassage 5, en sa fenêtre d'entrée 17 qui est sur l'exemple représenté inclinée à l'angle de Brewster. Cette cellule 5 est du type HERRIOT, et est pour le mode de réalisation représenté, composée de deux miroirs sphériques 18 et 19, de même focale, l'un de ces miroirs comprenant un orifice excentré 28 par lequel le faisceau 3 entre et sort de la cellule (le faisceau de sortie est numéroté 3') après N réflexions. Le faisceau 3' qui ressort de la cellule multipassage 5 est dirigé, via un miroir parabolique 21, sur le photodétecteur mesure 6.

Le faisceau référence 4 issu de la séparatrice 20 est quant à lui dirigé, via un système de miroirs plans (11, 25) et parabolique (14), sur le photodétecteur référence 15. Le système de miroirs plans 25, qui est monté sur une platine de translation, permet de faire varier la longueur du chemin optique de la voie référence entre la diode laser et le photodétecteur référence 15, sans en modifier l'alignement, afin d'obtenir l'égalisation des longueurs des chemins optiques des voies référence et mesure.

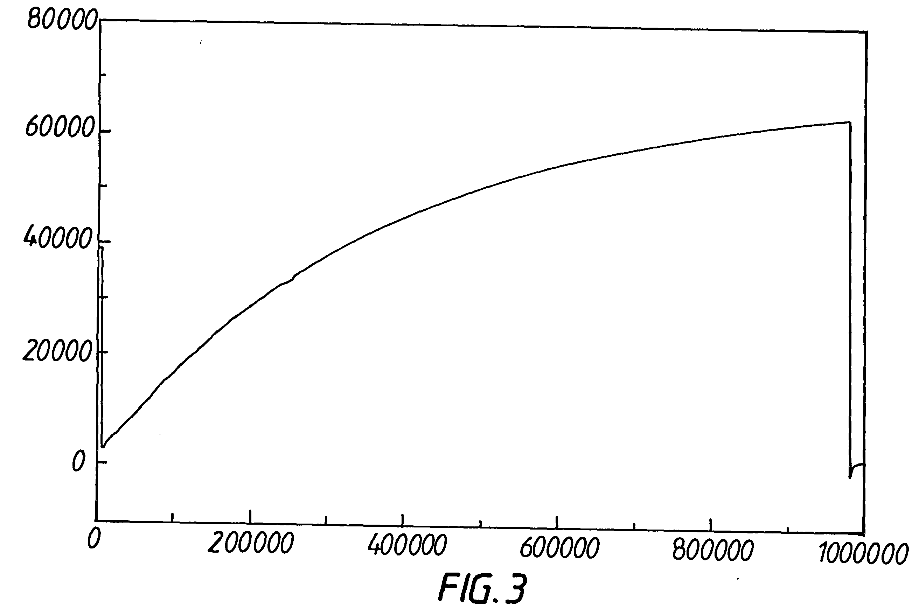

La figure 3 illustre un exemple de fonction de modulation du courant alimentant la diode laser 1, mise en place à l'aide du générateur de courant 13. L'exemple représenté illustre le cas d'une fonction de modulation du type 1-A exp. (-2,5 t), avec une période de 1 kHz.

La modulation est représentée ici tant au niveau des abscisses qu'au niveau des ordonnées en unités arbitraires (pour une unité de temps pour les abscisses et de voltage pour les ordonnées).

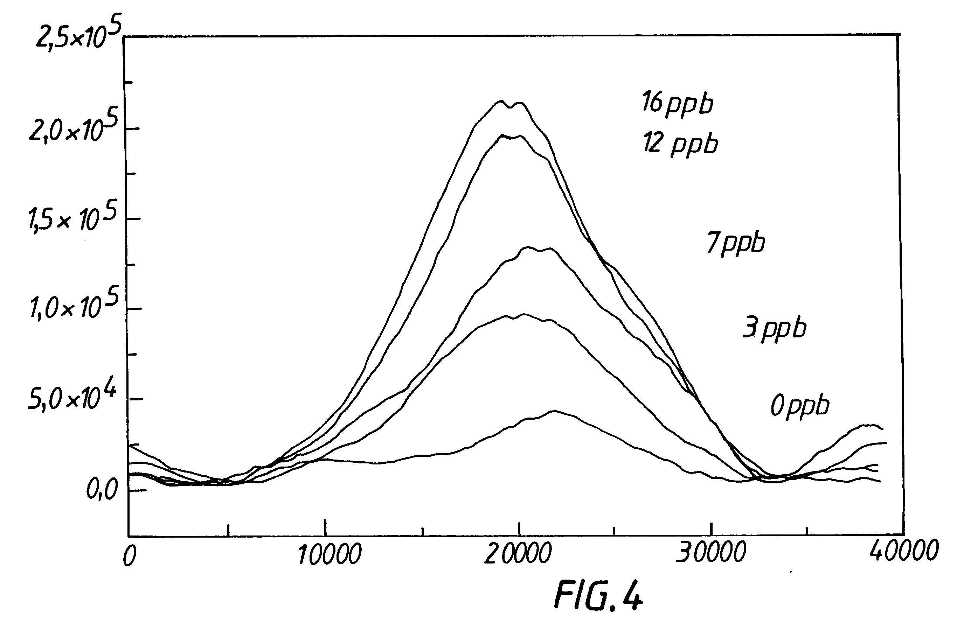

La figure 4 illustre les résultats obtenus pour différents exemples de mise en oeuvre d'une installation telle que celle décrite dans le cadre des figures 1 et 2, dans le cas de la détection de traces de vapeur d'eau dans un échantillon d'azote à analyser. La fonction de modulation utilisée ici avait la forme 1-exp.(-2,5 t), la température de la diode étant réglée de façon à ajuster la longueur d'onde de l'émission de la diode laser autour de la raie d'absorption qui est voisine de 1,37 μm de la vapeur d'eau (couverture de la bande spectrale d'environ 1,364 μm à 1,372 μm).

Pour chaque exemple de teneur en vapeur d'eau détectée, le signal représenté correspond à la différence des faisceaux mesure et référence obtenus. L'opération de balayage de la gamme de longueur d'onde précitée a été, pour chacun des cas traités, renouvelée 96 000 fois (acquisition du signal, traitement, stockage en mémoire et addition aux précédents signaux).

Les cinq signaux correspondent à des teneurs en vapeur d'eau dans l'azote allant de 0 ppb (balayage simple de la cellule à l'azote ultra-pur, ce "0" ppb devant donc être considéré comme qualifiant la soustraction des deux faisceaux ayant rencontré la même atmosphère d'azote) à 16 ppb, en passant par des teneurs intermédiaires correspondant à 3, 7, et 12 ppb de vapeur d'eau dans l'azote. Ces teneurs en vapeur d'eau ont été introduites dans l'azote de référence par l'utilisation de cartouches de perméation.

Pour tous ces exemples de mise en oeuvre, l'ensemble de la tête de détection (diode, cellule multipassage, détecteurs) était placé dans un capot hermétique balayé par un flux de gaz azote sec.

Ici encore, la représentation de la figure 4 utilise tant au niveau des abscisses qu'au niveau des ordonnées, des unités arbitraires (correspondant à des unités de temps en abscisses et de voltage en ordonnées).

On constate sur la figure 4, la présence pour la courbe "0 ppb" d'une légère absorption (présence d'une faible bosse dans la courbe), qui peut correspondre à un éventuel résiduel de vapeur d'eau dans la cellule, ou encore (le cas échéant en combinaison avec la raison précédente) à une légère imperfection dans l'égalisation des chemins optiques, ou encore, à une teneur en vapeur d'eau qui serait imparfaitement homogène dans le temps et/ou l'espace dans la tête de détection ou dans la cellule.

Il est alors satisfaisant de constater que malgré cette légère imperfection (à laquelle il est possible de remédier ou encore dont il est possible de tenir compte), on observe une différentiation spectaculaire des signaux obtenus dans chaque cas de concentration, même aux plus bas niveaux, puisque l'on différencie parfaitement les courbes obtenues pour 0, 3, et 7 ppb.

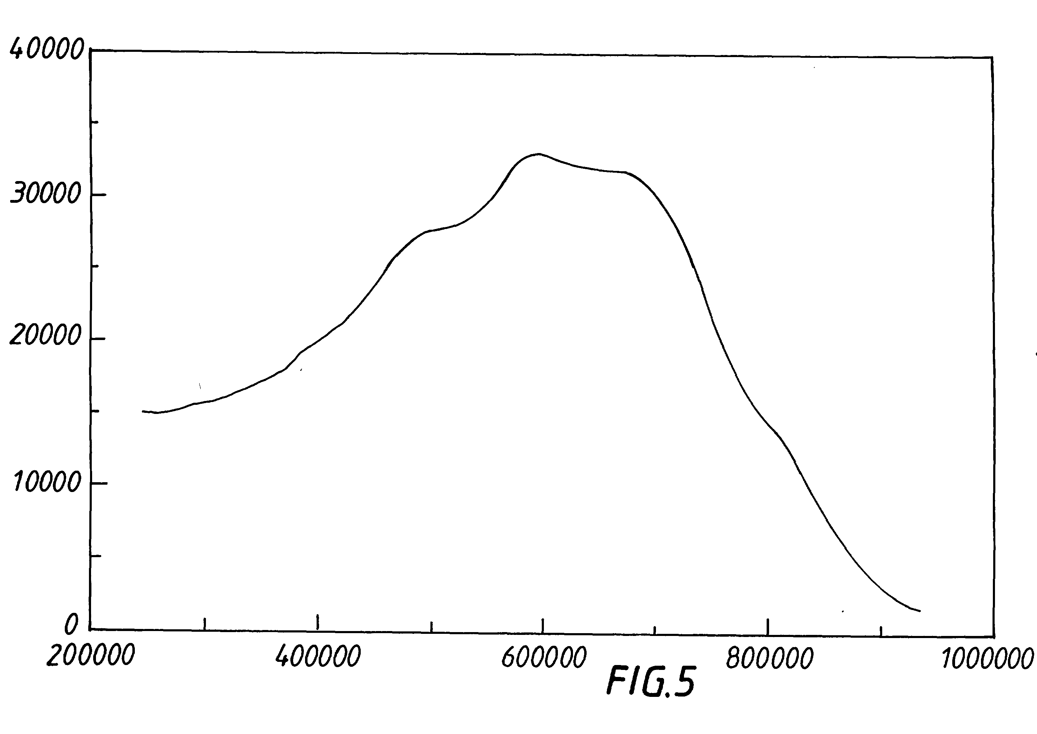

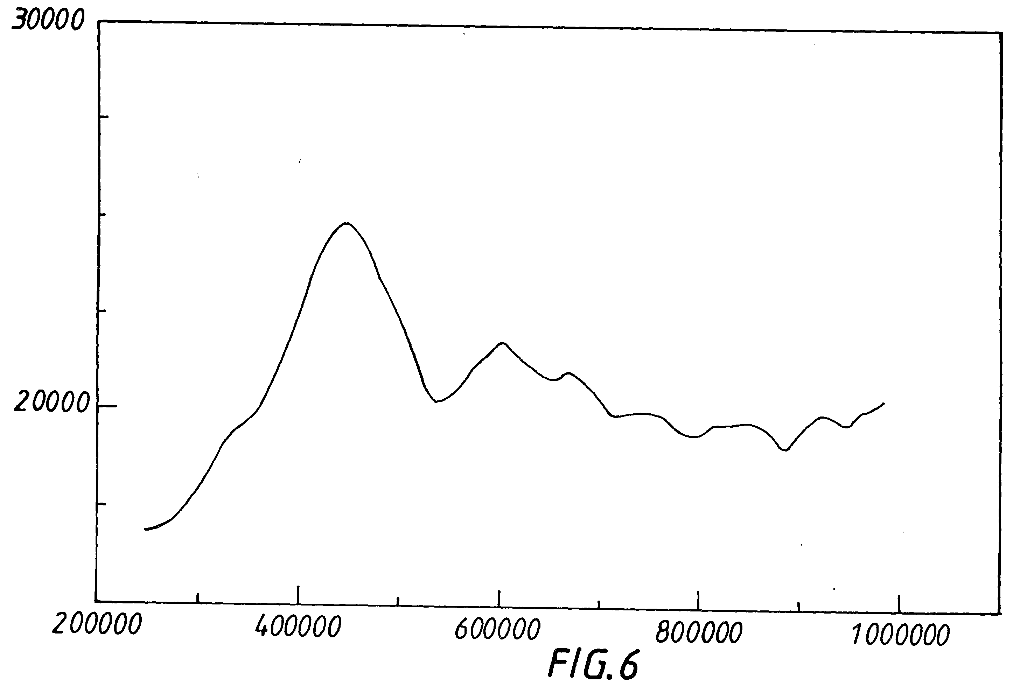

Les figures 5 et 6 illustrent, dans le cas de l'absence d'introduction de vapeur d'eau dans le gaz à analyser (simple balayage à l'azote sec), les résultats comparatifs observés pour l'utilisation d'une fonction de modulation exponentielle (modulation en 1 - exp(-2.5 t)) en remplacement d'une modulation traditionnelle en dents de scie.

La figure 5 (cas d'une modulation en dents de scie) illustre alors l'empâtement particulièrement important obtenu dans le cas de l'utilisation d'une telle modulation en dents de scie, même en "l'absence" de vapeur d'eau dans l'échantillon de gaz azote analysé.

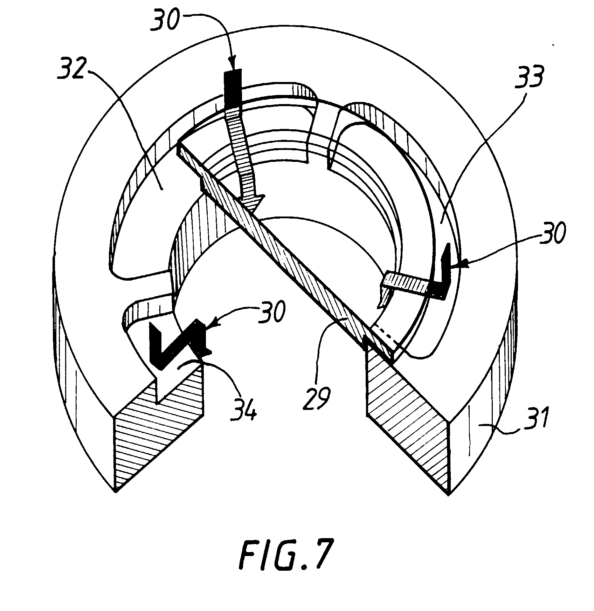

La figure 7 illustre un des modes de réalisation de l'injection de gaz à analyser dans une cellule 31 de géométrie cylindrique, ayant permis d'obtenir avec succès un régime d'écoulement laminaire du gaz dans la cellule. On reconnaît sur la figure 7, qui est une coupe partielle de l'entrée de la cellule 31, un miroir d'entrée 29 (on remarquera que seule la moitié du miroir a été représentée pour simplifier la représentation et aider ainsi à la visualisation). La cellule 31 présente, au niveau de sa face d'entrée, en dessous du miroir, trois découpes 32, 33, 34 d'injection de gaz en forme de portion d'anneau (sorte de corolle) se répartissant angulairement de façon à peu près symétrique autour de l'axe de la cellule. Le gaz à analyser qui arrive à l'entrée de la cellule passe alors sous le miroir, au sein de chaque découpe, avant d'entrer dans le corps cylindrique de la cellule. Afin de ne pas charger la figure on a illustré la circulation des gaz par de simples flèches 30, au nombre de trois, une par découpe.

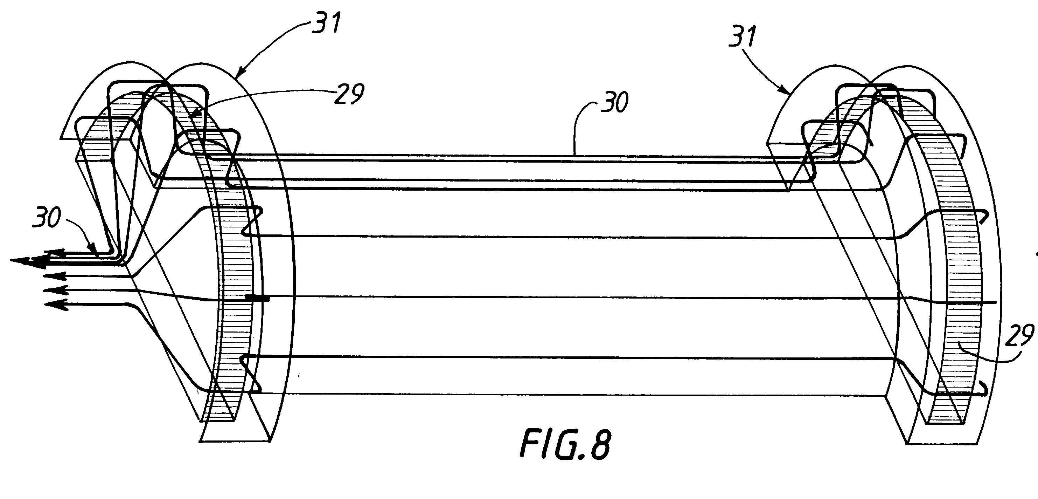

La figure 8 illustre une représentation schématique d'une simulation de la circulation du gaz obtenue dans une telle configuration, entre l'entrée et la sortie de la cellule, avec dans chaque cas le contournement du miroir par le gaz. Par souci de simplification, on n'a pas représenté sur cette figure les découpes d'injection, s'attachant plutôt à symboliser le résultat obtenu qui est l'absence ou la nette minimisation des phénomènes de Vortex, et la circulation du gaz à l'intérieur de la cellule selon un régime substantiellement laminaire.

Les figures 7 et 8 n'illustrent qu'une des nombreuses variantes possibles de réalisations des moyens d'admission et de sortie du gaz de la cellule permettant d'obtenir une telle circulation substantiellement laminaire. On pourrait envisager d'autres configurations, telles que par exemple l'utilisation d'orifices d'injection circulaires répartis à peu près équitablement autour de l'axe de la cellule.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art .

Ainsi, si le cas de la détection de traces de vapeur d'eau a tout particulièrement été évoqué et exemplifié dans ce qui précède, on comprendra que la présente invention s'applique beaucoup plus largement à d'autres impuretés détectables par absorption. On peut citer ici le cas de la détection de HF dans $WF_6$, en utilisant par exemple la raie de HF située à environ 1,3618 µm tout particulièrement intéressante. HF apparaissant dans une réserve de $WF_6$ par réaction entre $WF_6$ et $H_2O$, la quantification de HF permet donc de quantifier indirectement la décomposition de $WF_6$, et donc la quantité initial de vapeur d'eau présente dans la réserve.

De même, pour ce qui est du gaz vecteur, les exemples développés ci-dessus ont tout particulièrement illustré le cas d'un gaz vecteur d'azote (détection de traces de vapeur d'eau à l'échelle du ppb ou de quelques ppb dans l'azote). Mais il convient de noter que les travaux menés à bien par la Demanderesse ont démontré que le procédé et dispositif selon l'invention permettent également d'atteindre de telles limites de détection à l'échelle de quelques ppb dans le cas de la détection de traces de vapeur d'eau dans des gaz chimiques tels que $CF_4$, $SF_6$, ou encore $NF_3$.

**Revendications**

1.  Procédé d'analyse de traces d'au moins une impureté dans un échantillon de gaz, au moyen d'une diode (1) laser accordable, au cours duquel on mesure l'absorption, par l'impureté à détecter, d'un faisceau de lumière émis par la diode, le courant d'alimentation de la diode comprenant une composante continue et une composante variable permettant d'introduire une modulation de la longueur d'onde émise afin de décrire tout ou partie du profil d'au moins une des raies d'absorption de ladite impureté, le faisceau émis par la diode étant divisé en au moins deux faisceaux dérivés, dont l'un dit de mesure (3) est le long d'une voie de mesure dirigée vers l'échantillon de gaz à analyser qu'il traverse dans une cellule multipassage (5), avant d'être focalisé sur un photodétecteur de mesure (6), un autre faisceau dérivé dit de référence (4) étant le long d'une voie de référence directement focalisé sur un photodétecteur de référence (15) sans rencontrer l'échantillon de gaz, les chemins optiques des voies mesure et référence, respectivement entre la diode et le photodétecteur de mesure, et entre la diode et le photodétecteur de référence, ayant été égalisés dans l'air,
caractérisé en ce que ledit échantillon de gaz est à une pression au moins égale à la pression atmosphérique, et en ce que la dite modulation introduite comprend au moins une fonction de type exponentiel.

2.  Procédé selon la revendication 1 caractérisé en ce que ladite pression dudit échantillon de gaz n'excède pas $3.10^5$ Pa absolu.

3.  Procédé selon la revendication 2 caractérisé en ce que ladite pression dudit échantillon de gaz est située dans l'intervalle [$10^5$ Pa, $3.10^5$ Pa] absolu.

4.  Procédé selon l'une des revendications 1 à 3, caractérisé en ce que on balaye l'espace compris entre la diode laser et chaque détecteur par un gaz de protection.

5.  Procédé selon la revendication 4, caractérisé en ce que ledit balayage est réalisé de façon laminaire.

6.  Procédé selon l'une des revendications 1 à 5, caractérisé en ce que ladite impureté analysée est l'eau $H_2O$.

7.  Procédé selon la revendication 6, caractérisé en ce que la gamme de longueurs d'ondes décrite grâce à la modulation s'étend autour de l'une des deux longueurs d'onde suivantes : 1,37 µm ou 1,9 µm.

8.  Dispositif d'analyse de traces d'au moins une impureté dans un échantillon de gaz, convenant pour la mise en oeuvre du procédé selon l'une quelconque des revendications 1 à 7, comprenant :

    -   une diode (1) laser à semi-conducteur;
    -   au moins un système séparateur (20) permettant de diviser le faisceau (2) émis par la diode en au moins deux faisceaux dérivés, un faisceau dit de mesure (3) et un faisceau dit de référence (4) ;
    -   une cellule multipassage (5) contenant l'échantillon de gaz à analyser ;
    -   un dispositif optique (24) permettant d'envoyer, le long d'un trajet optique mesure, le faisceau mesure dérivé issu du système séparateur sur la cellule multipassage ;
    -   un photodétecteur mesure (6);
    -   un dispositif optique (21) permettant de diriger le faisceau mesure (3') issu de la cellule multipassage sur le photodétecteur mesure ;

- un photodétecteur de référence (15);
- un dispositif (26, 25, 27) permettant de diriger, le long d'un trajet optique référence, le faisceau dérivé référence issu du système séparateur sur le photodétecteur référence ;
- des éléments (7, 8, 9, 10) d'acquisition et de traitement des signaux générés par les photodétecteurs mesure et référence ;
- des moyens permettant d'égaliser les chemins optiques des voies mesure et référence, respectivement entre la diode et le photodétecteur de mesure, et entre la diode et le photodétecteur de référence,

caractérisé en ce qu'il comprend des moyens (13) de modulation du courant d'alimentation de la diode, permettant d'introduire une modulation comprenant au moins une fonction de type exponentiel.

9. Dispositif selon la revendication 8, caractérisé en ce que lesdits moyens d'égalisation des chemins optiques comprennent des systèmes de miroirs (25) présents sur la voie référence entre le système séparateur et le photodétecteur référence, montés sur une platine de translation.

10. Dispositif selon l'une des revendications 8 ou 9, caractérisé en ce qu'il comprend des moyens (12) de stabilisation de la température de la diode.

11. Dispositif selon l'une des revendications 8 à 10, caractérisé en ce que au moins l'un des éléments du groupe constitué de la diode et des photodétecteurs mesure et référence est dépourvu de fenêtre.

12. Dispositif selon l'une des revendications 8 à 11, caractérisé en ce que l'ensemble constitué de la diode, des photodétecteurs de mesure et de référence, et de la cellule multipassage comprenant le gaz à analyser, est isolé de l'atmosphère environnante, en étant situé dans un capot, qui est équipé de moyens d'injection d'un flux de gaz inerte à l'intérieur du capot.

13. Dispositif selon la revendication 12, caractérisé en ce que les moyens d'injection d'un flux de gaz sont dimensionnés de façon que ledit flux de gaz soit substantiellement laminaire.

14. Dispositif selon l'une des revendications 8 à 13, caractérisé en ce que la cellule est élaborée en un bloc métallique d'une seule pièce.

15. Dispositif selon l'une des revendications 8 à 14, caractérisé en ce que la cellule est munie de moyens (32, 33, 34) d'admission du gaz à analyser dans la cellule, et de sortie du gaz à analyser de la cellule, permettant d'établir un régime d'écoulement du gaz à l'intérieur de la cellule substantiellement laminaire.

FIG.1

EP 0 738 887 A1

**FIG.2**

EP 0 738 887 A1

*FIG.3*

FIG. 4

16 ppb

12 ppb

7 ppb

3 ppb

0 ppb

EP 0 738 887 A1

FIG.5

FIG.6

EP 0 738 887 A1

FIG.7

FIG.8

EP 0 738 887 A1

Office européen
des brevets

**RAPPORT DE RECHERCHE EUROPEENNE**

Numero de la demande

EP 96 40 0802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 026 991 (GOLDSTEIN NEIL ET AL) 25 Juin 1991 <br> * colonne 2, ligne 44 - colonne 3, ligne 56 * <br> --- | 1,8 | G01N21/39 |
| A | DE-A-26 35 171 (HARTMANN & BRAUN AG;LICENTIA GMBH; 6000 FRANKFURT) 9 Février 1978 <br> * page 6, alinéa 1 - page 9, alinéa 1; revendications; figures * <br> ----- | 1,8 | |

**DOMAINES TECHNIQUES RECHERCHES (Int.Cl.6)**

G01N
G01J

Le présent rapport a été établi pour toutes les revendications

| Lieu de la recherche | Date d'achèvement de la recherche | Examinateur |
|---|---|---|
| LA HAYE | 24 Juillet 1996 | Krametz, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)